# EUROPEAN PATENT SPECIFICATION

(11) **EP 0 289 337 B1**
(45) Date of publication and mention of the grant of the patent: **28.07.1993**
(21) Application number: 88303911.7
(22) Date of filing: 29.04.1988
(51) Int. Cl.: F15B 13/044, F16K 31/06, F15B 9/09

(54) **Solenoid valve**
Magnetventil
Vanne magnétique

(30) Priority: 30.04.1987 US 45009
(43) Date of publication of application: 02.11.1988
(73) Proprietor: AlliedSignal Inc., Morristown, New Jersey 07962-2245 (US)
(72) Inventor: Abel, Stephen G., Chandler Arizona 85226 (US)
(74) Representative: Rees, David Christopher

(56) References cited:
- EP-A- 0 171 998
- EP-A- 0 231 876
- DE-A- 1 934 212
- US-A- 2 804 877
- US-A- 3 865 140
- US-A- 4 649 803

## Description

The present invention relates to servo apparatus, for example, servo apparatus of the type used to control or direct the course of a dirigible projectile or automotive vehicle, such as a torpedo or an airborne missile. In such an application the servo apparatus is generally known as a fin actuator or control surface actuator, and is employed to move and selectively position a fin, rudder, or other movable control portion of the vehicle to affect its course of movement in response to a control signal.

More particularly, the present invention is concerned with a novel valve apparatus for use in servo apparatus of the above-described character.

Such valve apparatus may be employed to control a flow of pressurised compressible fluid from a source to a first receiver and from the first receiver to a lower pressure second receiver in response to respective input signals or commands.

When employed in a servo system of the above described character, the first receiver may be a fluid pressure responsive motor driving the vehicle control portion, while the second receiver may be a low pressure sump or vent to ambient pressure. The valve apparatus may be operatively associated with, or integrally formed with, a transducing device which drives a portion of the valve apparatus between selected operative positions in response to input signals. By way of example, the input signals may be electrical voltages or current signals originating with a vehicles autopilot. In such a case, the transducing device may take the form of a solenoid coil, or of a galvanometer movement coupled to the valve apparatus via a force amplifying structure.

A conventional servo valve is shown in US Patent No.2,505,981 (McLeod) wherein a pivotal input member is urged to alternative closed-centred, fill, or vent, positions by a balance of forces from four bellows members. Two of the bellows members cooperate to receive and exert fluid pressure differential input signal forces upon the input member. The other two bellows members cooperate to exert opposing output pressure and differentiated output pressure forces upon the input member. Accordingly, the servo valve is believed to be statically pressure balanced, and to be dynamically pressure imbalanced. As a result, the input signal forces are believed to be dynamically opposed by a time differentiated output pressure force.

However, the servo valve of McLeod is very difficult and unwieldy in its construction. Many of the component parts of this servo valve must be mounted on a support structure which is only cryptically disclosed. It is believed that reliable, precise operation of a servo valve as taught by McLeod would be very difficult or impossible to achieve.

By way of example only, the mission requirements of a very high-speed dirigible automotive vehicle, such as an air-to-air missile, well illustrate a very challenging problem to a servo system. On the one hand, missile launching and terminal phases of the mission require large, high-powered, frequent excursions of the missile aerodynamic control surfaces. These large excursions will be made in response to correlative input signals, and must be well sampled and executed with stability and without overshoot. Such large excursions of the control surfaces are necessary to achieve launching of the missile while avoiding collision with the parent aircraft, and to follow an evasive target successfully.

On the other hand, cruising phases of the missile mission require only comparatively small and infrequent control surface movements for course correction. However, these small course-corrective movements must in fact be made by the servo system in response to small input signals. That is, if the small input signals are lost to servo system dead band or hysteresis, a course correction will be effected only after the course error has reached a higher level. The missile will then undesirably follow a wandering course.

In view of the above, it will be appreciated that each phase of operation of a high-speed dirigible automotive vehicle, of whatever type, requires differing characteristics of the control servo system. Launch and terminal mission phases require a low-gain, high powered servo system which is stable at high frequencies. Missile cruise, on the other hand, requires a high-gain, sensitive and responsive servo system which will effect small input signals.

However, it is believed conventional servo apparatus cannot satisfactorily fulfil the full range of requirements set out above. Conventional servo valves generally have a substantially flat gain curve as a function of input frequency. However, the control surface movement requirements outlined above, and other servo system applications, require a relatively high system gain at low frequencies and a gain decreasing as a function of input signal frequency. This requirement is not necessarily within the scope of conventional servo apparatus and servo valves.

In view of the above-outlined deficiencies of conventional servo valve apparatus, it is an object of the present invention to provide servo valve apparatus wherein imbalanced pressure forces within the valve apparatus are substantially eliminated within a selected input signal frequency band width.

Further in view of the above, it is an object of the present invention to provide a servo valve apparatus where the input force dead band of the valve apparatus is substantially eliminated within the selected input frequency band width.

A concomitant objective for the present invention in view of the above is to provide a servo valve apparatus having an increased gain of output fluid pressure as a function of input signal magnitude within the selected band width of input frequency.

It is a still further object of the present invention to provide a servo valve apparatus displaying a gain decreasing with input frequency above the selected input frequency band width to reach a lesser substantially constant gain at a determined input frequency and thereabove.

EP-A-171998 (US-A-4 649 803) discloses a servo valve apparatus comprising a housing defining a flow path interconnecting an inlet port, an outlet port and a vent port and valve means in the flow path; the valve means being movable between a first position in which it closes communication from the inlet port to both the outlet port and the vent port, a second position in which it opens communication between the inlet port and only the outlet port, and a third position in which it opens a communication between the outlet port and only the vent port, the valve means defining a predetermined sealing area upon which fluid pressure is effective to urge the valve means from the first position towards one of the second and third positions; the apparatus including input means for selectively moving the valve means from the first position alternatively to either one of the second and third positions; the apparatus also comprising feedback means, including a first feedback area significantly exceeding the predetermined sealing area and arranged to urge movement of the valve means from either the second or third position towards the first position in response to fluid pressure effective thereon; means also being present communicating fluid pressure from the outlet port to the first feedback area substantially as a first time derivative of the fluid pressure level at the outlet port to act upon the first feedback area.

It is a further object of the present invention to provide a servo valve apparatus with an improved control system.

The present invention is therefore characterised in that the feedback means includes a second feedback area oppositely disposed with respect to the first feedback area and substantially equaling in area the difference between the first feedback area and the predetermined sealing diameter area, and further includes means freely communicating fluid pressure from the outlet port to the second feedback area.

The inventive valve apparatus herein set forth may be employed to control a flow of pressurised compressible fluid from a source to a first receiver and from the first receiver to a lower pressure second receiver in response to respective input signals or commands.

Preferably, the valve means includes a pair of relatively movable valve members movably received within the housing; in which the first valve member closes fluid communication between the inlet port and the outlet port in the first position while defining the predetermined sealing area, opens fluid communication between the inlet port and the outlet port in the second position and defines a passage communicating the outlet port with the vent port; and in which the second valve member sealingly cooperates with the first valve member in the first position to close the passage and fluid communication between the outlet port and the vent port and opens fluid communication between the outlet port and the vent port via the passage in the second position.

Preferably, the input means comprises electromagnetic means for effecting movement of the valve means alternatively to one of the second and third positions in response to an electrical input signal applied thereto. Preferably, the input means comprises a magnetic armature portion drivingly connected with an input member for movement in unison therewith, the input member operatively associating with the valve means, the feedback means comprising a stepped piston member drivingly connected with the input member for movement in unison therewith, the stepped piston member sealingly cooperating with the housing to define the two feedback areas on opposite faces thereof. Conveniently, the input member is elongate, and the stepped piston member is connected to the input member between the magnetic armature portion and the end of the input member which is operatively associated with the valve means.

In an alternative embodiment, the input means comprises a bore in the housing, piston means sealingly and recipricably received in the bore and defining a pair of variable-volume chambers expanding and contracting in opposition in response to reciprocating movement of the piston means and defining further the first and second feedback areas on respective oppositely-disposed faces thereof, the piston means being drivingly connected with the input means for effecting movement thereof in response to reciprocation of the piston means. Preferably, in such a case, means are provided for communicating a fluid pressure differential input signal to the pair of variable-volume chambers to effect reciprocation of the input member. Preferably, the input means comprises an elongate input member carrying the piston means, and the input member in part defines the means for communicating fluid pressure to the first feedback area.

Preferably, also, in such a case, the bore is stepped to provide a central portion of comparatively larger diameter, the piston means comprises a stepped piston member having a central portion of comparatively larger diameter extending radially outwardly into the larger diameter bore portion, and diaphragm means are provided which reciprocally guide the piston member within the bore and sealingly cooperate with both the housing and piston member to bound the pair of variable-volume chambers. Conveniently, the diaphragm means comprises four axially spaced apart diaphragm members the first and second of which axially sandwich the larger diameter piston portion and respectively bound one of the pair of variable-volume chambers; the third and fourth diaphragm members being spaced apart axially outwardly of the pair of variable-volume chambers to bound the latter, while also bounding a respective one of a pair of variable-volume cavities, each of the variable-volume cavities communicating directly with a respective one of the first and second feedback areas.

Accordingly, the present invention may provide servo valve apparatus wherein a first valve member cooperates with an annular seat both to close communication between an inlet port and an outlet port and to define a first effective sealing area. The valve member may movably cooperate with a housing both to close communication between the inlet port and a vent port and to define a second effective sealing area substantially equal with the first effective area so that the first valve member is pressure balanced. A second valve member may then sealingly cooperate with the first valve member to close communication between the outlet port and the vent port and defines a third effective sealing area substantially matching the first and second effective areas. An input member can engage the second valve member to urge the second valve member into sealing engagement with the first valve member or to selectively allow unseating thereof, or to unseat the first valve member while maintaining sealing engagement of the valve members. The input member may also sealingly and movably cooperate with a housing portion to define two concentric and opposed feedback effective areas. The first of the opposed feedback effective areas significantly exceeds the third effective area and is disposed to urge the first and second valve members into sealing engagement in response to fluid pressure thereon, while the other of the opposed effective areas defines an area substantially equal to the area difference between the first opposed effective area and the third effective area. The other opposed effective area freely communicates with the output port while the first opposed effective area is restrictively communicated with the outlet port so that fluid pressure effective thereon approximates a first time derivative of output port pressure Therefore, the servo valve is substantially statically pressure balanced, while being dynamically pressure imbalanced according to a first time derivative of fluid pressure at the output port with a significant margin of dynamic feedback forces over static and dynamic frictions.

Thus, the present invention may be considered to provide servo valve apparatus of the two-way, closed-centre type in which an input member is movable to communicate selectively pressure fluid from an inlet to an outlet, or from the outlet to a vent, in response to respective input signals. The input member is subject to fluid pressure at the outlet substantially to pressure balance the valve apparatus. The communication of the input member with output fluid pressure is inhibited so that with rapid changes in output pressure the valve apparatus is not fully pressure balanced and exhibits a lessened gain and increased force dead band.

In view of the above, it will be seen that a number of advantages are offered by the present invention. For example, a servo valve according to the invention may use a lower powered input force transducer because the valve apparatus is substantially pressure balanced at relatively low input frequencies. Furthermore, the valve apparatus according to the present invention, while displaying a relatively high gain at low input frequencies, has a diminishing gain with increasing input frequency so that the stability of a servo system including the servo valve is enhanced at higher operating frequencies of input signal. Still further, a servo system according to the invention has a high gain at low input frequencies so that infrequent input signals of low magnitude are not swamped out or lost to servo system inertia, deadband, or hysteresis, and are in fact therefore effected by the servo system. Additionally, the servo system includes, via the servo valve, a negative feedback loop analogous to acceleration of the output member so that stability of the servo system at high input frequencies is enhanced, and overshoot is avoided.

The invention may be carried into practice in various ways and some embodiments will now be described by way of example with reference to the accompanying drawings in which:
Figure 1 schematically depicts a control system embodying the invention;
Figure 2 is a side view, partially in cross section, of a control valve portion of a control system embodying the invention;
Figure 2A is an enlarged fragmentary view of a portion of Figure 2; and
Figure 3 is a somewhat schematic fragmentary representation of an alternative embodiment of a control valve portion of a control system embodying the invention.

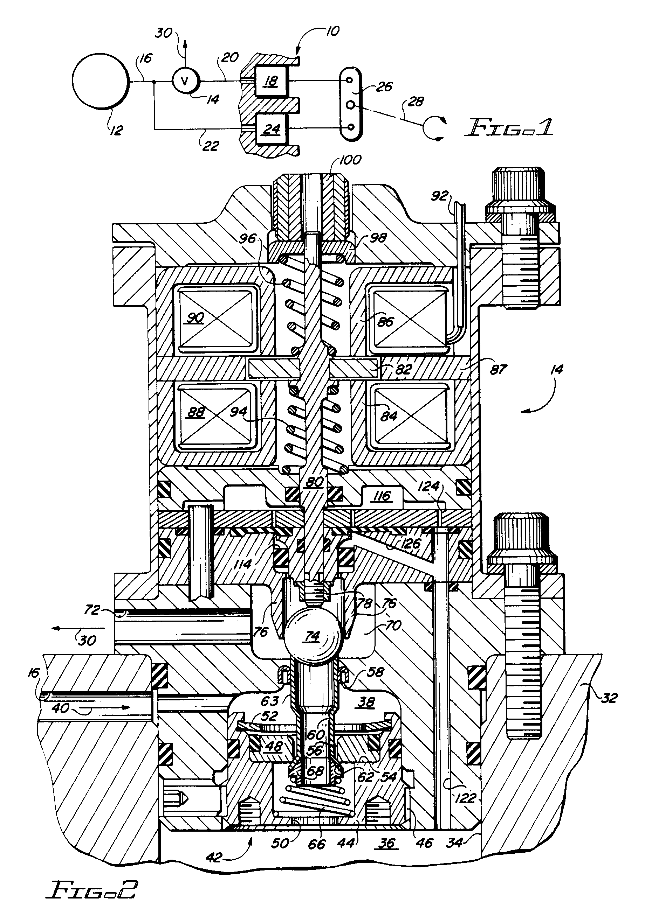

Figure 1 schematically depicts a pneumatic control system 10 for selectively controlling the angular or pivotal position of a load member. The control system 10 includes pressure fluid source 12 communicating pressurised fluid to a three-way control valve 14 via a conduit 16. The pressurised fluid in the conduit 16 can be selectively directed from the control valve 14 to a first variable-volume motor chamber 18 of greater effective area via a conduit 20 or can be vented as shown by the arrow 30. A second conduit 22 connects with the conduit 16 between the source 12 and the valve 14 to communicate pressurised fluid to a second variable-volume motor chamber 24 of lesser effective area than the first chamber 18. The chambers 18 and 24 are bounded by piston heads connected to a centrally pivoted toggle member 26. The toggle member 26 is mechanically connected at 28 for rotational torque transmission to a load member to effect pivotal movement thereof in response to expansion and contraction of the chambers 18, 24.

In order to effect expansion of the first chamber 18 and concomitant contraction of the second chamber 24 with the resulting pivotal movement of the load member via the connection 18, the valve 14 selectively provides communication from the source 12 to the first chamber 18. Because the effective area of the chamber 18 exceeds that of chamber 24, the latter is contracted while the chamber 18 expands.

On the other hand, pivotal movement of the load member in the opposite direction is effected by selective closure of the communication from the source 12 to the first chamber 18 and concurrent venting of pressure fluid to ambient, as depicted by the arrow 30. When the pressure level in the first chamber 18 drops sufficiently below that in the second chamber 24 to overcome the difference in their effective areas, pivotal movement of the load in the sense resulting from expansion of the second chamber 24 and the contraction of the first chamber 18 results.

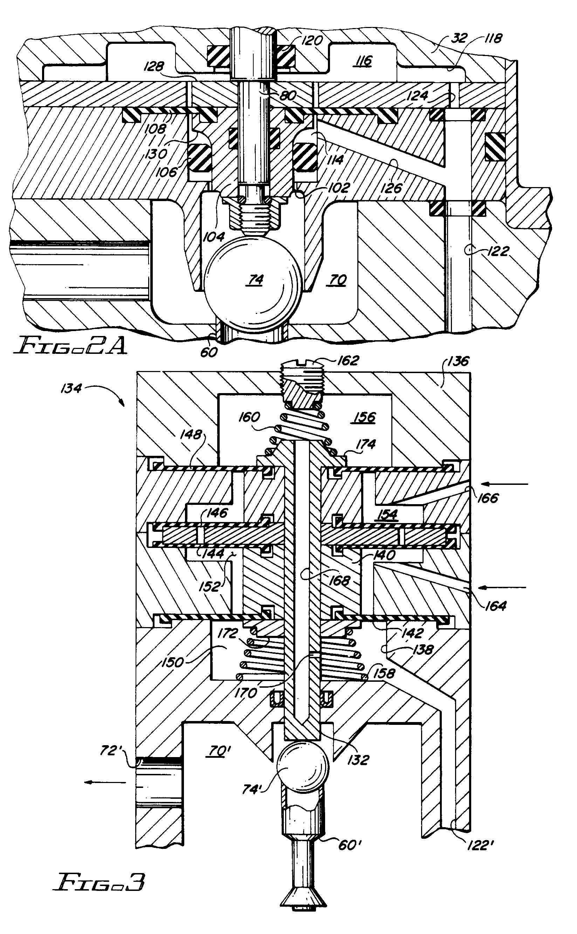

To the extent so far described immediately above, the present control system generally corresponds to that described in the present Applicants' US patent No.4,649,803, the disclosure of which is incorporated herein to the extent necessary for a complete understanding of the present invention. In order to achieve advantages over the previous design, the present invention includes a control system 10 with a control valve 14 as shown in Figures 2 and 2A. The control valve 14 includes a multi-part housing 32, defining a bore 34. The remainder of the housing 32 serves to close one end of the bore 34 so as to bound a chamber 36. The chamber 36 communicates with the chamber 18 of the control system shown in Figure 1.

The housing 32 also defines a chamber 38 and a portion of the conduit 16 communicating pressurised fluid from the source 12 thereto, as shown by the arrow 40. Located between the chambers 36, 38 there is an axially movable annular seat assembly 42. A first annular carrier member 44 of the seat assembly 42 threadably and sealingly engages the housing 32, via a thread 46. A second annular seat member 48 is sealingly carried by the first carrier member 44 in a stepped through bore 50 formed in the latter. A combined retaining ring and spring member 52 engages both the carrier 44 and the seat 48 to ensure that the latter is captured in engagement with a shoulder 54 in the bore 50. The bore 50 opens to the chamber 36 to define an outlet port for the servo valve 14.

A stepped tubular elongate valve member 60 movably extends through a bore 56 in the seat member 48, the chamber 38 and through an annular sealing member 58 carried by the housing 32. The valve member 60 defines a flared end portion 62 sealingly engaging the seat member 48 to define a first sealing diameter and area. A second generally cylindrically enlarged portion 63 of the valve member 60 movably and sealingly engages the sealing member 58 to define a second sealing diameter and area substantially matching the first area between the member 60 and the seat 48. A coil spring member 66 extends between the carrier member 44 and an annular spring seat 68 to bias the valve member 60 yieldably into sealing engagement with the seat member 48. Because the valve member 60 is pressure balanced as described above and is lightly spring loaded into a closed seated sealing position in engagement with the seat member 48, the inlet passage 16 and the chamber 38 are normally closed from fluid communication with the chamber 36.

The housing 32 defines a vent chamber 70 which receives an end part of the valve member 60, and a vent passage 72 which opens outwards from the vent chamber 70 to ambient. A spherical valve member 74 is movably received within an annularly spaced series of guide fingers 76 (only two of which are visible in Figure 2) to engage sealingly the valve member 60 within the chamber 70. The lower end 78 of a vertically reciprocable input member 80 engages the valve member 74 to urge the latter into sealing engagement with the valve member 60 to define a third sealing diameter and effective area substantially equal to the earlier-described first and second effective areas.

The input member 80 carries an annular magnetic armature portion 82 juxtaposed with an opposed pair of axially spaced apart pole pieces 84,86 of a magnetic stator element which also includes a radially extending portion 87. Each of the stator element pole pieces 84,86 is associated with a respective one of a pair of electromagnetic windings 88,90 having input signal conductors 92 extending out of the valve 14. In order to establish a centred position for the input member 80 in which the valve member 60 sealingly engages the seat 48 and the valve member 74 is seated upon the valve member 60, an opposed pair of springs 94,96 act between the input member and the housing 32. The spring 96 seats upon a relatively movable seat portion 98 of the housing 32. An adjusting member 100 threadably engages the housing 32 and bears upon the seat portion 98 to allow convenient setting of the desired contered-valve seated position of the input member 80 with the preload of the spring 96 slightly exceeding that of the the spring 94.

With reference now more particularly to Figure 2A, it can be seen that the housing defines a stepped bore 102 extending from the vent chamber 70 away from the valve member 60. A stepped piston portion 104 of the input member 80 is sealingly and movably received in the bore 102. A pair of spaced sealing members, the first an O-ring 106, and the second an annular diaphragm 108, sealingly cooperate with the housing 32 and the piston portion 104 to define an annular chamber 114, and to separate sealingly an annular chamber 116 from the chambers 114 and 70. The chamber 116 is defined within the housing 32 by a cavity 118 extending radially outwardly from the input member 80, and is bounded by an O-ring seal 120 sealingly cooperating with a comparatively large diameter portion of the input member 80.

Furthermore, the housing 32 defines a passage 122 opening at its lower end into the chamber 36, and thereby communicating with the outlet port 50. At its upper end, the passage 122 communicates with the chamber 116 via a restrictive orifice 124. A branch passage 126 communicates the chamber 114 with the chamber 36 via the passage 122. Thus, the fluid pressure prevailing within the chamber 114 always corresponds with that the outlet port 50, while the fluid pressure in the chamber 116 corresponds to that at the port 50 under static or slowly changing conditions.

The stepped piston member 104 is seen to define an opposed pair of annular face areas 128,130 respectively exposed to the fluid pressure in the chambers 116 and 114. The effective area of the face 128 is significantly greater than that of the previously-described and substantially equal first, second, and third areas defined by the valve member 60, 74, and the sealing member 58. On the other hand, the area of the oppositely disposed annular face 130 of the piston member 104 is substantially equal to the difference in area between that of the face 128 and the first, second, and third areas of the valve members.

Having described the structure of the servo valve 14, its operation will now be described. The fluid pressure source 12 provides pressurised fluid via the conduit 16 to the chamber 38. During operation of the system 10, the valve 14 will have communicated pressure fluid to the chamber 18 via the outlet port 50 so that a comparatively lower fluid pressure prevails in the chambers 18, 36, 114 and 116. The chamber 70 is communicated to ambient pressure via the passage 72. With the valve members 60 and 74 both seated, the valve member 60 is pressure balanced and biased into sealing engagement with the seat member 48. The valve member is urged upwardly (in the drawings) by the fluid pressure in the chamber 36 communicated by the valve member 60. On the other hand, fluid pressures within the chambers 114 and 116 equal that within the chamber 36, and the area of the face 128 on the piston portion 104 exceeds that of the face 130 by an area substantially equal to the sealing area of the valve member 74 on the valve member 60. Consequently, the valve member 74 is urged into sealing engagement with the valve member 60 by the slightly greater preload of the spring 96 over the spring 94. Such pressure balancing of the servo valve 14 prevails for static conditions of pressure at the outlet port 50, and also generally applies for relatively slow rates of pressure change upwards or downwards at the outlet port.

However, if operation of the solenoid valve results in more rapidly changing fluid pressure at the outlet port 50, the pressure balancing described above does not apply. For example, if the coil 88 is energised to draw the armature 82 downwards, the input member 80 forces the valve members 74 and 60 downwards to unseat the latter from the seat 48. As a result, pressure fluid flows from the inlet conduit 16 to the outlet port 50 to increase the fluid pressure there. The rate of increase of fluid pressure at the outlet port 50 will depend upon many parameters including, but not limited to, the volume and initial pressure level of the conduit 20 and the chamber 18. Fluid pressure in the chamber 114 will closely follow that at the outlet port 50. However, because of the orifice 124 and its own volume, the fluid pressure in the chamber 116 lags behind the pressure at the port 50 approximately as a first time derivative of the latter. As a result, the input member 80 is urged upwards by a feedback force the product of an area and fluid pressure (face 130 plus the second sealing area at member 58), and is urged downwardly by a product of pressure and area. The downward force is created by the face 128 and the relatively lower fluid pressure prevailing in the chamber 116 as this pressure lags behind the pressure at the outlet port 50.

In view of the above, the input force is seen to be opposed during dynamic operation of the solenoid valve 14 by a feedback force approximating to a first time derivative of pressure at the outlet port 50. Because of the comparatively larger areas defined on the piston portion 104, the feedback force so created has an improved force margin over the static and dynamic frictions of the solenoid valve 14.

It will therefore readily be understood that in the event of the input member 80 being moved upwards by energisation of the coil 90 to unseat the valve member 74 from the member 60, venting of the pressure from the chambers 36 and 18 will result. In this case, the higher pressure prevailing in the chamber 116 prior to starting of such venting results in a downward feedback force on the input member 80. As the pressure in the chamber 116 is bled off via the orifice 124 in response to the decreasing pressure at the outlet port 50, the feedback force effective on the input member 80 also approximates a first time derivative of the pressure at the port 50. In all cases, the dynamic feedback force effective within the servo valve 14 enjoys a significant force margin over the static and dynamic frictions of the servo valve and is approximately a first time derivative of the fluid pressure at the outlet port 50.

Figure 3 shows an alternative embodiment of the invention in which the structural and functional details of the valve portions of the apparatus are assumed to be the same as that shown in Figures 2 and 2A. Component parts of the embodiment of Figure 3 which are the same in structure or function as parts of Figures 2 and 2A are referenced with the same numeral used previously but have a prime added. However, the embodiment of Figure 3 contemplates a fluid pressure differential input signal in contract to the electrical input signal employed by the first embodiment.

In order to move an input member 132 of the servo valve 134, a housing 136 defines a stepped bore 138 opening to a vent chamber 70′. A stepped piston portion 140 of the input member 132 is movably carried centrally within the bore 138 cooperatively by four annular diaphragm members 142-148 which each sealingly engage both the housing 136 and the stepped piston portion 140 of the input member 1 32. The diaphragm members 142-148 cooperate with housing 136 and input member 132 to define four chambers 150-156. Within the chamber 150 a spring 158 extends between the piston portion 140 and the housing 136 to urge the input member 132 upwards. A spring 160 in the chamber 156 extends between the piston portion 140 and a spring seat member 162. The spring seat member 162 threadably and sealingly engages the housing 136 to allow convenient adjustment of the input member 132 and the valve members 60′,74′ to a closed-centred position.

The housing 136 defines a passage 122′ communicating the chamber 150 with the outlet port (not illustrated) of the servo valve 134. Similarly, the housing 136 defines passages 164,166 opening out from the chambers 152,154, respectively, to receive fluid pressure differential input signals. The input member 132 defines a central blind passage 168 opening to the chamber 156. A restrictive orifice 170 defined by the input member 132 communicates the passage 168 with the chamber 150.

During operation, the servo valve 134 receives fluid pressure differential input signals, or pressures, via the passages 164, 166. In the event that the fluid pressure in the chamber 154 is sufficiently greater than that in chamber 152, the input member is moved downwards to supply pressurised fluid from a source to an outlet port of the solenoid valve, in a similar way to the operation described with reference to Figures 2 and 2A. Of course, if the fluid pressure in the chamber 152 is the greater, the input member 132 is moved upwards to vent fluid pressure to ambient.

When the input member 132 is moved downwards increasing fluid pressure substantially equal to that at the outlet port is communicated via the passage 122′ to the chamber 150. This fluid pressure exerts an upwardly directed feedback force on the stepped piston portion 140 by the exertion of pressure upon an annular face 172. Pressure fluid from the chamber 150 is communicated via the orifice 170 to the passage 168 and so to the chamber 156 at a rate which approximates a first time derivative of the fluid pressure at the outlet port. That is, the fluid pressure in the chamber 156 lags behind that in the chamber 150 while the fluid pressure at the outlet port is dynamically increasing. This fluid pressure in the chamber 156 exerts a downwardly directed feedback force upon a face 174 of the input member.

As a consequence of the above, the input force exerted upon the input member 132 by the fluid pressure differential between the chambers 152 and 154 is resisted by a feedback force approximately equal to a first time derivative of the increasing fluid pressure at the outlet port. Because the stepped piston portion 140 of the input member 132 provides feedback faces 172, 174 which are significantly greater in area than the sealing areas defined by the valve members 60′,74′, the feedback force so exerted enjoys a favourable force margin over the static and dynamic frictions effective within the solenoid valve 134.

It will be further understood that if the input member 132 is moved upwards to vent pressure fluid via the vent port 72′, then decreasing pressure prevails in the chamber 150. The pressure of the fluid in the chamber 156 will also decrease with time as fluid is vented, approximately as a first time derivative. That is, the fluid pressure in the chamber 156 will dynamically exceed that in the chamber 150 to exert a downwardly directed feedback force on the input member 132 opposing the input force.

## Claims

1. A servo valve apparatus (14) comprising a housing (32) defining a flow path interconnecting an inlet port (16), an outlet port (50) and a vent port (72), and valve means (60,74) in the flow path; the valve means (60,74) being movable between a first position in which it closes communication from the inlet port (16) to both the outlet port (50) and the vent port (72), a second position in which it opens communication between the inlet port (16) and only the outlet port (50), and a third position in which it opens communication between the outlet port (50) and only the vent port (72), the valve means (60,74) defining a predetermined sealing area upon which fluid pressure is effective to urge the valve means from the first position towards one of the second and third positions; the apparatus (14) including input means (80-92) for selectively moving the valve means (60,74) from the first position alternatively to either one of the second and third positions; the apparatus (14) also comprising feedback means including a first feedback area (128) significantly exceeding the predetermined sealing area and arranged to urge movement of the valve means (60,74) from either the second or third position towards the first position in response to fluid pressure effective thereon; means (122,124) also being present communicating fluid pressure from the outlet port (50) to the first feedback area (128) substantially as a first time derivative of the fluid pressure level at the outlet port (50) to act upon the first feedback area (128), characterised in that the feedback means also includes a second feedback area (130) oppositely disposed with respect to the first feedback area (128) and substantially equaling in area the difference between the first feedback area (128) and the predetermined sealing diameter area, and further includes means (126) freely communicating fluid pressure from the outlet port (50) to the second feedback area (130).

2. Apparatus as claimed in Claim 1, characterised in that the valve means includes a pair of relatively movable valve members (60,74) movably received within the housing (32); in which the first valve member (60) closes fluid communication between the inlet port (16) and the outlet port (50) in the first position while defining the predetermined sealing area, opens fluid communication between the inlet port (16) and the outlet port (50) in the second position and defines a passage communicating the outlet port (50) with the vent port (72); and in which the second valve member (74) sealingly cooperates with the first valve member (60) in the first position to close the passage and fluid communication between the outlet port (50) and the vent port (72) and opens fluid communication between the outlet port (50) and the vent port (72) via the passage in the second position.

3. Apparatus as claimed in any preceding claim characterised in that the input means comprises electromagnetic means (82-92) for effecting movement of the valve means alternatively to one of the second and third positions in response to an electrical input signal applied thereto.

4. Apparatus as claimed in Claim 3, characterised in that the input means comprises a magnetic armature portion (82) drivingly connected with an input member (80) for movement in unison therewith, the input member (80) operatively associating with the valve means, the feedback means comprising a stepped piston member (104) drivingly connected with the input member (80) for movement in unison therewith, the stepped piston member (104) sealingly cooperating with the housing (32) to define the two feedback areas (128,180) on opposite faces thereof.

5. Apparatus as claimed in Claim 4 characterised in that the input member (80) is elongate, and the stepped piston member (104) is connected to the input member (80) between the magnetic armature portion (82) and the end of the input member (80) which is operatively associated with the valve means.

6. Apparatus as claimed in Claim 1 or Claim 2, characterised in that the input means comprises a bore (138) in the housing, piston means (140) sealingly and reciprocably received in the bore and defining a pair of variable-volume chambers (152,154) expanding and contracting in opposition in response to reciprocating movement of the piston means (140) and defining further the first and second feedback areas (172,174) on respective oppositely-disposed faces thereof, the piston means being drivingly connected with the input means for effecting movement thereof in response to reciprocation of the piston means.

7. Apparatus as claimed in Claim 6 characterised by means (164,166) for communicating a fluid pressure differential input signal to the pair of variable-volume chambers (152,154) to effect reciprocation of the input member (132).

8. Apparatus as claimed in Claim 6 or Claim 7 characterised in that the input means comprises an elongate input member (132) carrying the piston means (140), and the input member in part defines the means (168,170) for communicating fluid pressure to the first feedback area (174).

9. Apparatus as claimed in any of Claims 6 to 8 characterised in that the bore (178) is stepped to provide a central portion of comparatively larger diameter, the piston means comprises a stepped piston member having a central portion of comparatively larger diameter extending radially outwardly into the larger diameter bore portion, and diaphragm means (142-148) are provided which reciprocally guide the piston member (140) within the bore and sealingly cooperate with both the housing and piston member to bound the pair of variable-volume chambers (152,154).

10. Apparatus as claimed in Claim 9 characterised in that the diaphragm means comprises four axially spaced apart diaphragm members (142-148) the first and second of which (144,146) axially sandwich the larger diameter piston portion and respectively bound one of the pair of variable-volume chambers (152,154); the third and fourth diaphragm members (142,148) being spaced apart axially outwardly of the pair of variable-volume chambers to bound the latter, while also bounding a respective one of a pair of variable-volume cavities (150,156), each of the variable-volume cavities communicating directly with a respective one of the first and second feedback areas (172,174).

## Patentansprüche

1. Servoventilvorrichtung (14) mit einem einen Strömungsweg umgrenzenden Gehäuse (32), das eine Einlaßöffnung (16), eine Auslaßöffnung (50) und eine Ablaßöffnung (72) untereinander verbindet, sowie mit einer Ventileinrichtung (60, 74) im Strömungsweg; welche Ventileinrichtung (60,74) zwischen einer ersten Stellung bewegbar ist, in der sie die Verbindung von der Einlaßöffnung (16) sowohl zur Auslaßöffnung (50), als auch zur Ablaßöffnung (72) abschließt, und einer zweiten Stellung, in der sie die Verbindung zwischen der Einlaßöffnung (16) und nur der Auslaßöffnung (50) öffnet, sowie einer dritten Stellung, in der sie eine Verbindung zwischen der Auslaßöffnung (50) und nur der Ablaßöfffnung (72) freigibt, wobei die Ventileinrichtung (60, 74) einen vorbestimmten Abdichtungs-Flächenbereich bildet, auf den der Fluiddruck derartig wirkt, daß er die Ventileinrichtung aus der ersten Stellung gegen die zweite oder dritte Stellung drängt; welche Vorrichtung (14) eine Eingabeeinrichtung (80-92) zum wahlweisen Bewegen der Ventileinrichtung (60, 74) aus der ersten Stellung alternativ in die zweite oder dritte Stellung aufweist; und die Vorrichtung (14) auch Rückführeinrichtungen, einschließlich eines ersten Rückführ-Flächenbereiches (128) besitzt, der den vorbestimmten Abdichtungs-Flächenbereich deutlich übersteigt und so angeordnet ist, daß er die Ventileinrichtung (60, 74) auf Grund eines darauf wirkenden Fluiddruckes zu einer Bewegung entweder aus der zweiten oder aus der dritten Stellung gegen die erste Stellung drängt; wobei auch eine Einrichtung (122, 124) vorhanden ist, die den Fluiddruck von der Auslaßöffnung (50) dem ersten Rückführ-Flächenbereich (128) als eine erste Zeitableitung des Fluiddruckniveaus an der Auslaßöffnung (50) mitteilt, um auf den ersten Rückführ-Flächenbereich (128) zu wirken, dadurch gekennzeichnet, daß die Rückführeinrichtung einen dem ersten Rückführ-Flächenbereich (128) gegenüberliegenden zweiten Rückführ-Flächenbereich (130) im wesentlichen gleichen Flächenausmaßes wie die Differenz zwischen dem ersten Rückführ-Flächenbereich (128) und dem vorbestimmten Flächenbereich des Abdichtdurchmessers aufweist, und daß sie ferner eine Einrichtung (126) aufweist, die den Fluiddruck von der Auslaßöffnung (50) frei an den zweiten Rückführ-Flächenbereich (130) weitergibt.

2. Vorrichtung nach Anspruch 1, dadurch gekennzeichnet, daß die Ventilvorrichtung ein Paar von relativ zueinander bewegbaren Ventilgliedern (60, 74) aufweist, die beweglich innerhalb des Gehäuses (32) aufgenommen sind; von denen das erste Ventilglied (60) in seiner ersten Stellung die Fluidverbindung zwischen der Einlaßöffnung (16) und der Auslaßöffnung (50) abschließt, während es den vorbestimmten Abdicht-Flächenbereich bildet, in der zweiten Stellung die Fluidverbindung zwischen der Einlaßöffnung (16) und der Auslaßöffnung (50) freigibt und einen Durchlaß begrenzt, der die Auslaßöffnung (50) mit der Ablaßöffnung (72) verbindet; und wobei das zweite Ventilglied (74) in der ersten Stellung mit dem ersten Ventilglied (60) abdichtend so zusammenwirkt, daß der Durchlaß und die Fluidverbindung zwischen der Auslaßöffnung (50) und der Ablaßöffnung (72) geschlossen ist, und in der zweiten Stellung die Fluidverbindung zwischen der Auslaßöffnung (50) und der Ablaßöffnung (72) über den Durchlaß freigegeben ist.

3. Vorrichtung nach einem der vorhergehenden Ansprüche, dadurch gekennzeichnet, daß die Eingabeeinrichtung eine elektromagnetische Einrichtung (82-92) zum Bewirken einer Bewegung der Ventileinrichtung alternativ in die zweite oder dritte Stellung auf Grund eines daran angelegten elektrischen Eingangssignales aufweist.

4. Vorrichtung nach Anspruch 3, dadurch gekennzeichnet, daß die Eingabeeinrichtung einen magnetischen Ankerteil (82) aufweist, der mit einem Eingabeorgan (80) für den Antrieb für eine gemeinsame Bewegung verbunden ist, wovon das Eingabeorgan (80) betrieblich dem Ventilglied zugeordnet ist, und die Rückführeinrichtung weist ein abgestuftes Kolbenglied (104) auf, das mit dem Eingabeorgan (80) für den Antrieb für eine gemeinsame Bewegung verbunden ist, welches abgestufte Kolbenglied (104) mit dem Gehäuse (32) unter Abdichtung zusammenwirkt, um an seinen einander gegenüberliegenden Flächen zwei Rückführ-Flächenbereiche (128,180) zu bilden.

5. Vorrichtung nach Anspruch 4, dadurch gekennzeichnet, daß das Eingabeorgan (80) länglich ist, und das abgestufte Kolbenglied (104) mit dem Eingabeorgan (80) zwischen dem Magnetankerteil (82) und dem Ende des Eingabeorganes (80) verbunden ist, das der Ventileinrichtung betrieblich zugeordnet ist.

6. Vorrichtung nach Anspruch 1 oder 2, dadurch gekennzeichnet, daß die Eingabeeinrichtung eine Bohrung (138) im Gehäuse aufweist, eine Kolbeneinrichtung (140), die in der Bohrung unter Abdichtung hin- und herbewegbar aufgenommen ist und ein Paar von Kammern (152,154) veränderlichen Volumens begrenzt, die sich - einander entgegengesetzt - auf Grund einer hin- und hergehenden Bewegung der Kolbeneinrichtung (140) erweitern und zusammengedrückt werden, die ferner den ersten und den zweiten Rückführ-Flächenbereich (172,174) an ihren jeweils einander gegenüberliegenden Flächen bildet, wobei die Kolbeneinrichtung mit der Eingabeeinrichtung in Antriebsverbindung steht, um eine Bewegung derselben in Abhängigkeit von der Hin- und Herbewegung der Kolbeneinrichtung zu bewirken.

7. Vorrichtung nach Anspruch 6, gekennzeichnet durch Einrichtungen (164,166) zum Mitteilen eines Eingangssignales aus einer Fluiddruckdifferenz an das Paar von Kammern (152,154) mit veränderlichem Volumen vorgesehen, um eine Hin- und Herbewegung des Eingabeorganes (132) zu bewirken.

8. Vorrichtung nach Anspruch 6 oder 7, dadurch gekennzeichnet, daß die Eingabeeinrichtung ein längliches, das Kolbenglied (140) tragendes Eingabeorgan (132) aufweist, und daß das Eingabeorgan teilweise die Einrichtung (168,170) zum Mitteilen des Fluiddruckes an den ersten Rückführ-Flächenbereich (174) bildet.

9. Vorrichtung nach einem der Ansprüche 6 bis 8, dadurch gekennzeichnet, daß die Bohrung (178) abgestuft ist, um einen mittleren Abschnitt vergleichsweise größeren Durchmessers zu bilden, und die Kolbeneinrichtung ein abgestuftes Kolbenglied mit einem mittleren Abschnitt vergleichsweise größeren Durchmessers aufweist, der sich radial auswärts in den Bohrungsabschnitt größeren Durchmessers hineinerstreckt, und daß Membraneinrichtungen (142-148) vorgesehen sind, die das Kolbenglied (140) innerhalb der Bohrung hin- und herbewegbar führen und unter Abdichtung sowohl mit dem Gehäuse, als auch mit dem Kolbenglied zusammenwirken, um das Paar von Kammern (152,154) veränderlichen Volumens zu begrenzen.

10. Vorrichtung nach Anspruch 9, dadurch gekennzeichnet, daß die Membraneinrichtungen vier in Axialrichtung voneinander beabstandete Membranelemente (142-148) aufweisen, von denen das erste und das zweite (144,146) den Kolbenabschnitt größeren Durchmessers sandwichartig zwischen einander aufnehmen und jeweils eine aus dem Paare von Kammern (152,154) veränderlichen Volumens begrenzen; wogegen das dritte und vierte Membranelement (142,148) axial auswärts von dem Paar von Kammern veränderlichen Volumens in einem Abstande voneinander liegen, um die letztere zu begrenzen, während sie auch jeweils einen aus einem Paare von Hohlräumen (150,156) veränderlichen Volumens begrenzen, von welchen Hohlräumen veränderlichen Volumens ein jeder unmittelbar mit jeweils einem aus dem ersten und zweiten Rückführ-Flächenbereich (172,174) in Verbindung steht.

## Revendications

1. Dispositif de soupape asservie (14) comprenant un boîtier (32) définissant un trajet d'écoulement interconnectant un orifice d'entrée (16), un orifice de sortie (50) et un orifice d'évacuation (72), et un moyen de soupape (60, 74) dans le trajet de l'écoulement ; le moyen de soupape (60, 74) étant déplaçable entre une première position à laquelle il ferme la communication entre l'orifice d'entrée (16) et l'orifice de sortie (50) et l'orifice d'évacuation (72), et une seconde position à laquelle il ouvre la communication entre l'orifice d'entrée (16) et seulement l'orifice de sortie (50) et à une troisième position à laquelle il ouvre la communication entre l'orifice de sortie (50) et seulement l'orifice d'évacuation (72), le moyen de soupape (60, 74) définissant une surface d'obturation prédéterminée sur laquelle la pression du fluide est effective pour pousser le moyen de soupape de la première position vers l'une quelconque des seconde et troisième positions ; le dispositif (14) comportant un moyen d'entrée (80 à 92) pour sélectivement déplacer le moyen de soupape (60, 74) de la première position à l'une des seconde et troisième positions en alternance ; le dispositif (14) comprenant également des moyens de contre-réaction comportant une première surface de contre-réaction (128) dépassant de manière significative la surface d'obturation prédéterminée et prévue pour solliciter le déplacement du moyen de soupape (60, 74) à partir de l'une quelconque des seconde ou troisième positions vers la première position en réponse à la pression fluidique effective sur celui-ci ; un moyen (122, 124) étant également présent faisant communiquer la pression du fluide à partir de l'orifice de sortie (50) à une première surface de contre-réaction (128) pratiquement comme une première dérivée dans le temps du niveau de pression de fluide à l'orifice de sortie (50) pour agir sur la première surface de contre-réaction (128), caractérisé en ce que le moyen de contre-réaction comporte également une seconde surface de contre-réaction (130) disposée de manière opposée par rapport à la première surface de contre-réaction (128) ayant une surface qui est pratiquement égale à la différence entre la première surface de contre-réaction (128) et la surface en diamètre d'obturation prédéterminée, et comporte de plus un moyen (126) pour faire communiquer librement la pression du fluide à partir de l'orifice de sortie (50) à la seconde surface de contre-réaction (130).

2. Dispositif selon la revendication 1, caractérisé en ce que le moyen de soupape comporte une paire d'éléments de soupape relativement mobiles (60, 74) reçus de manière mobile à l'intérieur du boîtier (32) ; dans lequel le premier élément de soupape (60) ferme la communication fluidique entre l'orifice d'entrée (16) et l'orifice de sortie (50) dans la première position tout en définissant la surface d'obturation prédéterminée, ouvre la communication fluidique entre l'orifice d'entrée (16) et l'orifice de sortie (50) dans la seconde position et définit un passage de communication de l'orifice de sortie (50) à l'orifice d'évacuation (72) ; et dans lequel le second élément de soupape (74) coopère de manière étroite avec le premier élément de soupape (60) dans la première position pour fermer le passage et la communication fluidique entre l'orifice de sortie (50) et l'orifice d'évacuation (72) et pour ouvrir la communication fluidique entre l'orifice de sortie (50) et l'orifice d'évacuation (72) par l'intermédiaire du passage dans la seconde position.

3. Dispositif selon l'une quelconque des revendications précédentes caractérisé en ce que le moyen d'entrée comprend un moyen électromagnétique (82 à 92) pour effectuer le déplacement du moyen de soupape en va-et-vient alternativement à l'une des seconde et troisième positions en réponse à un signal d'entrée électrique qui lui est appliqué.

4. Dispositif selon la revendication 3, caractérisé en ce que le moyen d'entrée comprend une partie d'induit magnétique (82) connectée de manière commandée à un élément d'entrée (80) pour déplacement à l'unisson avec celui-ci, l'élément d'entrée (80) associant de manière fonctionnelle le moyen de soupape, le moyen de contre-réaction comprenant un élément de piston étagé (104) raccordé de manière commandée à l'élément d'entrée (80) pour déplacement à l'unisson avec celui-ci, l'élément de piston étagé (104) coopérant de manière étroite avec le boitier (32) pour définir les deux surfaces de contre-réaction (128, 180) sur ses faces opposées.

5. Dispositif selon la revendication 4, caractérisé en ce que l'élément d'entrée (80) est allongé, et en ce que l'élément de piston étagé (104) est raccordé à l'élément d'entrée (80) entre la partie d'induit magnétique (82) et l'extrémité de l'élément d'entrée (80) qui est associée de manière fonctionnelle au moyen de soupape.

6. Dispositif selon la revendication 1 ou la revendication 2, caractérisé en ce que le moyen d'entrée comprend un alésage (138) dans le boitier, le moyen de piston (140) étant reçu de manière étanche et en va-et-vient dans l'alésage et définissant une paire de chambres à volume variable (152, 154) se dilatant et se rétractant en opposition en réponse au déplacement en va-et-vient du moyen de piston (140) et définissant de plus les première et seconde surfaces de contre-réaction (172, 174) sur ses faces respectives disposées de manière opposée, le moyen de piston étant raccordé de manière commandée au moyen d'entrée pour effectuer le déplacement de celui-ci en réponse au mouvement en va-et-vient du moyen de piston.

7. Dispositif selon la revendication 6, caractérisé par un moyen (164, 166) pour communiquer un signal d'entrée différentiel de pression de fluide à la paire de chambres à volume variable (152, 154) pour effectuer le mouvement en va-et-vient de l'élément d'entrée (132).

8. Dispositif selon la revendication 6 ou la revendication 7, caractérisé en ce que le moyen d'entrée comprend un élément d'entrée allongé (132) supportant le moyen de piston (140), et le moyen d'entrée définit en partie le moyen (168, 170) pour communiquer la pression fluidique à la première surface de contre-réaction (174).

9. Dispositif selon l'une quelconque des revendications 6 à 8, caractérisé en ce que l'alésage (178) est étagé pour procurer une partie centrale d'un diamètre comparativement plus grand, le moyen de piston comprend un élément de piston étagé ayant une partie centrale d'un diamètre comparativement plus grand se prolongeant radialement vers l'extérieur dans la partie d'alésage d'un diamètre plus grand, et des moyens de diaphragme (142 à 148) sont prévus qui guident en va-et-vient l'élément de piston (140) à l'intérieur de l'alésage et coopèrent de manière étanche avec le boitier et l'élément de piston pour limiter la paire des chambres à volume variable (152, 154).

10. Dispositif selon la revendication 9, caractérisé en ce que les moyens de diaphragme comprennent quatre éléments de diaphragme axialement espacés (142 à 148), dont le premier et le second prennent en sandwich axialement la partie de piston de diamètre plus grand et limitent respectivement une chambre de la paire de chambres à volume variable (152, 154) ; les troisième et quatrième éléments de diaphragme (142, 148) étant espacés axialement vers l'extérieur par rapport à la paire des chambres à volume variable pour limiter la dernière, tout en limitant également une cavité respective de la paire des cavités à volume variable (150, 156), chacune des cavités à volume variable communiquant directement avec une surface respective des première et seconde surfaces de contre-réaction (172, 174).
